Europäisches Patentamt

European Patent Office

Office européen des brevets

(11) Veröffentlichungsnummer: **0 495 458 A2**

## EUROPÄISCHE PATENTANMELDUNG

(21) Anmeldenummer: **92100515.3**

(51) Int. Cl.⁵: **F16K 17/04**, E03C 1/10

(22) Anmeldetag: **14.01.92**

(30) Priorität: **16.01.91 DE 4101114**

(43) Veröffentlichungstag der Anmeldung:
**22.07.92 Patentblatt 92/30**

(84) Benannte Vertragsstaaten:
**AT BE CH DE DK ES FR GB GR IT LI LU MC NL PT SE**

(71) Anmelder: **Grünbeck Wasseraufbereitung GmbH**
**Industriestrasse 1**
**W-8884 Höchstädt/Donau(DE)**

(72) Erfinder: **Michl, Peter**
**Etter 6**
**W-8886 Wittislingen(DE)**

(74) Vertreter: **Prüfer, Lutz H.**
**PRÜFER & PARTNER, Patentanwälte,**
**Harthauser Strasse 25d**
**W-8000 München 90(DE)**

(54) **Rohrtrenner.**

(57) Es wird ein Rohrtrenner (1) mit einer Sperreinrichtung (4), die in einer ersten Stellung einen Eingang (2) mit einem Ausgang (3) des Rohrtrenners verbindet und in einer zweiten Stellung den Eingang von dem Ausgang abtrennt, und mit einer Steuereinrichtung (38, 54, 83) zum Schalten der Sperreinrichtung in die erste bzw. zweite Stellung und mit einem je nach Stellung den Flüssigkeitsstrom vom Eingang zum Ausgang sperrenden oder freigebenden vorgespannten ausgangsseitigen Sperrventil (30) geschaffen. Zum Vermeiden von Fehlfunktionen und zum Verbessern der Betriebssicherheit weist die Sperreinrichtung ein um eine sich quer zur Durchflußrichtung erstreckende Achse drehbares Absperrelement (9, 81, 87) mit einer in einer ersten Drehstellung Ein- und Ausgang (2, 3) verbindenden Bohrung (11) auf. Ferner ist ein Sperrventil (25) vorgesehen, welches in eine Sperrstellung vorgespannt ist und je nach Stellung den Flüssigkeitsstrom vom Eingang (2) zum Ausgang (3) sperrt oder freigibt.

FIG.1

EP 0 495 458 A2

Die Erfindung betrifft einen Rohrtrenner nach dem Oberbegriff des Patentanspruches 1.

Ein derartiger Rohrtrenner ist aus der DE 32 47 325 C bekannt. Die Funktion dieses Rohrtrenners beruht auf einem Druckvergleichsverfahren zwischen Eingangs- und Ausgangsseite des Rohrtrenners, wobei in Abhängigkeit der Druckverhältnisse ein Rohrtrennerkolben oder ein Kolbentrennrohr mit Wasserdruck in die Durchflußstellung und beim Trennvorgang durch den eingangsseitigen Druckabfall über eine Feder, welche direkt auf den Rohrtrennerkolben bzw. auf das Kolbentrennrohr wirkt, in die jeweilige Betriebsstellung umsteuert. Dabei sind relativ große Kolbenwege bis in die jeweiligen Endlagen notwendig. Außerdem müssen die Gleitflächen qualitativ hochwertig sein, um die Dichtigkeit zwischen Rohrtrennerkolben und Rohrtrennergehäuse zu gewährleisten. Durch den ständigen Presswasseraustausch am Rohrtrenner kommt es im Kolbenraum zu Ablagerungen auf den Gleitflächen, was zur Abnutzung der Dichtelemente führt. Außerdem sind relativ große Federn für den Rückhub des Rohrtrennerkolbens erforderlich. Arbeitet die Rückstellfeder nicht einwandfrei, ist darüber hinaus ein Umsteuern in die Trennstellung nicht mehr möglich.

Aus DE-GM 89 05 206 ist ein Rohrtrenner bekannt, der aus zwei herkömmlichen Rückschlagventilen und zwei dazwischen in einem Kreuzstück vertikal übereinander angeordneten modifizierten herkömmlichen Rückflußverhinderern aufgebaut ist. Der obere der hierbei eingesetzten Rückflußverhinderer weist als wesentliches Funktionselement eine durch den Druck des im geöffneten Zustand des Rohrtrenners durchfließenden Wassers in einen Ventilsitz gedrückte oder aber bei Unterbrechung des Durchflusses aus diesem herausfallende Kugel auf und dient im Trennzustand zur Belüftung des Kreuzstücks. Der untere Rückflußverhinderer weist eine durch das durchfließende Wasser gegen die Kraft einer Feder in einen Ventilsitz gedrückte oder aber bei Beendigung des Durchflusses durch die Feder aus diesem herausgedrückte Kugel auf und dient dazu, im Trennzustand das Wasser im Kreuzstück abfließen zu lassen. Dieser Rohrtrenner entspricht bezüglich der Fehlersicherheit konstruktiv nicht den aktuellen gesetzlichen Anforderungen; darüberhinaus hängt seine Funktion empfindlich von der einwandfreien Lage der Kugeln in ihrem Ventilsitz ab, die z. B. durch Verunreinigungen oder Ablagerungen leicht beeinträchtigt werden können.

Aufgabe der Erfindung ist es, einen Rohrtrenner der eingangs beschriebenen Art zu schaffen, der die oben beschriebenen Nachteile nicht mehr aufweist. Insbesondere soll auch die Betriebssicherheit erhöht werden.

Diese Aufgabe wird durch den in Patentanspruch 1 gekennzeichneten Rohrtrenner gelöst.

Weiterbildungen der Erfindung sind in den Unteransprüchen gekennzeichnet.

Weitere Merkmale und Zweckmäßigkeiten der Erfindung ergeben sich aus der Beschreibung von Ausführungsbeispielen anhand der Figuren.

Von den Figuren zeigen:

Fig. 1     eine Schnittdarstellung einer ersten Ausführungsform des Rohrtrenners in Trennstellung;

Fig. 2     eine vergrößerte Darstellung der Sperreinrichtung;

Fig. 3     eine vergrößerte Darstellung der Steuereinrichtung;

Fig. 4     eine Schnittdarstellung des Rohrtrenners in Durchflußstellung;

Fig. 5     eine Schnittdarstellung einer abgewandelten Ausführungsform;

Fig. 6     ein Detail der in Fig. 5 gezeigten Ausführungsform in drei Stellungen;

Fig. 7     ein Detail der in Fig. 5 gezeigten Ausführungsform;

Fig. 8     eine Prinzipskizze (Schnittdarstellung in der senkrechten Mittelebene) einer weiteren Ausführungform;

Fig. 9     eine zweite Prinzipskizze (Schnittdarstellung in der horizontalen Mittelebene) dieser Ausführungsform;

Fig. 10   eine perspektivische Darstellung des Absperrelements dieser Ausführrungsform.

Der Rohrtrenner 1 weist einen durch einen Eingangsstutzen 2 gebildeten und mit einem Rohr verbindbaren Eingang und einen durch einen Ausgangsstutzen 3 gebildeten und mit einem Rohr verbindbaren Ausgang auf. Zwischen Eingangsstutzen 2 und Ausgangsstutzen 3 ist eine Sperreinrichtung 4 vorgesehen. Die Sperreinrichtung umfaßt ein Gehäuse 5. Das Gehäuse 5 ist gebildet durch einen mit dem Eingangsstutzen verbundenen eingangsseitigen Flansch 6, einen diesem in einem Abstand gegenüberliegenden und mit dem Ausgangsstutzen 3 verbundenen Flansch 7 und ein zwischen diesen gehaltenes zylindrisches Rohr 8. Im Inneren des Gehäuses ist ein Küken 9 vorgesehen. Dieses umfaßt einen zylindrischen Abschnitt 10 , dessen Achse sich senkrecht zur Achse des Rohres 8 erstreckt. In dem zylindrischen Abschnitt 10 ist eine sich senkrecht zur Achse des zylindrischen Abschnittes erstreckende Bohrung 11 vorgesehen. Das Küken 9 weist am Boden des zylindrischen Abschnittes 10 einen Lagerzapfen 12 auf, der mit einer im Bodenbereich des Rohres 8 vorgesehenen Lagersenkung lagermäßig in Eingriff ist. Auf seiner dem Lagerzapfen 12 gegenüberliegenden Deckseite weist der zylindrische Abschnitt 10 einen zylinderförmigen Ansatz 13 mit einem sich quer zur Achse des Lagerzapfens 12 erstreckenden und mit seiner Mitte mit der Achse zusammenfallenden Schlitz 14 auf. An der der den Lagerzapfen 12 aufnehmenden Senkung gegenüberliegenden Stelle des Rohres 8 ist eine Bohrung vorgesehen, durch die eine Mitnehmerwelle 15 geführt ist, die mit einem mit dem Schlitz 14 in Eingriff befindlichen Mitnehmerteil 16 in Eingriff ist und durch das Gehäuse nach außen zu einem Getriebe geführt ist.

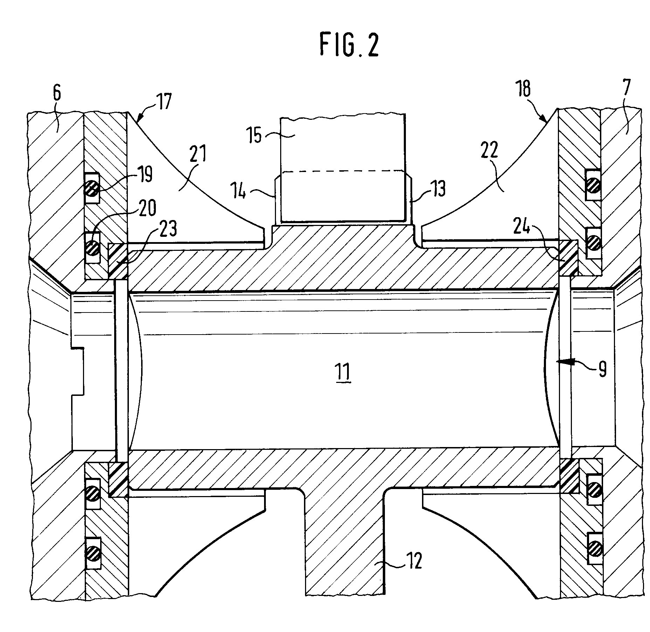

Auf den einander zugewandten Flächen weisen die Flansche 6, 7 koaxial zu den Rohrmündungen angeordnete kreisförmige Ausnehmungen auf, in die jeweils sogenannte Druckstücke 17, 18 eingesetzt sind. Auf ihrer den Flanschen zugewandten Fläche erfolgt eine Abdichtung mit Hilfe von Dichtringen. Jedes Druckstück weist einen koaxial zur Drehachse des Kükens 9 vorgesehenen hohlzylindrischen Wandabschnitt 21 bzw. 22 auf, wie insbesondere aus Fig. 2 ersichtlich ist. In dem mit der Kükenwandung zusammenwirkenden Bereich weisen die Wandabschnitte 21, 22 vorzugsweise aus Teflonmaterial gebildete Beläge 23, 24 auf, die zur Abdichtung zwischen dem Eingangsstutzen bzw. dem Ausgangsstutzen und der Bohrung 11 des Kükens dienen. Die Druckstücke sind zum Ausgleich von Toleranzen frei beweglich. Vorzugsweise sind sogar Federelemente vorgesehen, welche zwischen den Flanschen 6, 7 und den daran anliegenden Druckstücken 17, 18 liegen und die Druckstücke in jedem Fall gegen das Küken 9 drücken, um die Dichtigkeit zu gewährleisten. Die Federelemente können gummielastisch ausgebildet sein oder durch andere Federn wie beispielsweise Tellerfedern realisiert sein.

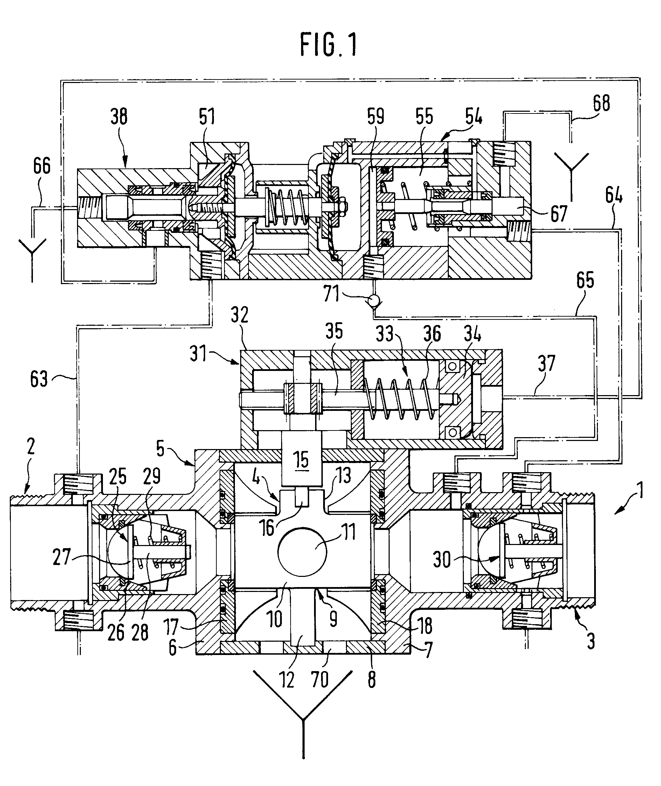

Eingangsseitig von der Sperreinrichtung 4 ist im Eingangsstutzen ein Ventil 25 vorgesehen. Es weist einen Ventilsitz 26 und einen mit diesen zusammenwirkenden Ventilkörper 27 mit Ventilschaft 28 auf. Das Ventil ist mittels einer Druckfeder in die in Fig. 1 gezeigte geschlossene Stellung vorgespannt. Ein entsprechendes Ventil 30 ist ausgangsseitig vom Küken 9 in dem Ausgangsstutzen 3 vorgesehen. Dieses ist ebenfalls mit einer Feder in Richtung zur Eingangsseite hin in der in Fig. 1 gezeigten Weise in Schließstellung vorgespannt.

Auf diese Weise ist in dem Bereich eingangsseitig vor dem Ventil 25 eine Vordruckzone, in dem Bereich ausgangsseitig von dem Ventil 30 eine Nachdruckzone und in dem Bereich zwischen den beiden Ventilen 25 und 30 eine Mitteldruckzone gebildet.

Die durch das Rohr nach außen führende Mitnehmerwelle 15 gehört zu einer Getriebeeinheit 31. Diese umfaßt ein mit dem Gehäuse 5 verbundenes Gehäuse 32 mit einer darin angeordneten Kolben-Zylinder-Anordnung 33. Die Kolben-Zylinder-Anordnung 33 umfaßt einen Zylinderraum und einen in diesem hin- und herbewegbaren Steuerkolben 34, der mit einer Zahnstange 35 verbunden ist. Es ist eine Druckfeder 36 vorgesehen, die den Steuerkolben und damit die Zahnstange in die in Fig. 1 gezeigte zurückgezogene Stellung vorspannt. Die Zahnstange befindet sich mit einem zahnkranzförmigen Abschnitt der Mitnehmerwelle 15 direkt oder über ein zwischengeschaltetes Übersetzungsbetriebe in Eingriff. Das Übersetzungsverhältnis ist in Abhängigkeit von der Größe des Rohrtrenners und der damit verbundenen Verstellkraft für das Küken 9 gewählt. Auf der der Druckfeder abgewandten Seite des Steuerkolbens 34 ist der Zylinderraum mit einer Steuerleitung 37 verbunden.

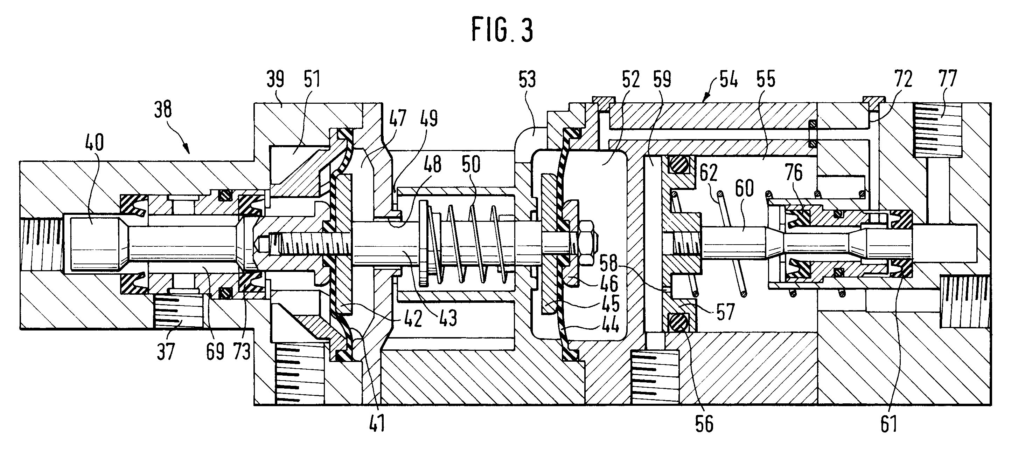

Zum Steuern der Getriebeeinheit 31 ist eine an sich aus der DE 35 20 250 C bekannte Steuereinheit 38 vorgesehen. Die Steuereinheit 38 ist als Druckvergleichsventil ausgebildet. Sie umfaßt ein Gehäuse 39, in welchem ein Steuerkolben 40 fest mit einer Membran 41, einem Membranteller 42, einem Verbindungskolben 43, einer Membran 44 und zugehörigem Membranteller 45 und einer Scheibe 46 verbunden ist. Eine obere Membrankammer 47 ist über eine Bohrung 48 und einen freien Durchgang 49 zur Atmosphäre offen. Eine Feder 50 ist auf 0,55 bar vorgespannt und drückt bei Druckausgleich zwischen einer unteren Membrankammer 51 und einer oberen Druckkammer 52 die Membranen 41, 44 sowie den Steuerkolben 34 und den Verbindungskolben 43 in die in den Fig. 1 und 3 gezeigte Trennstellung.

Unterhalb der Membran 44 sind Entlüftungsschlitze 53 für den Druckausgleich vorgesehen. Außerdem wird bei Membranbruch eine direkte Verbindung zur Atmosphäre geschaffen.

Die Steuereinheit 38 umfaßt eine zugehörige Schalteinheit 54. Diese ist als 4/2-Wege-Ventil ausgebildet und weist einen Schieberraum 55 auf, in welchem ein mit einer Dichtung 56 versehener Steuerschieber 57 hin- und herbewegbar ist. Der Steuerschieber weist eine Verbindungsbohrung 58 auf, welche den oberen Schieberraum 55 mit einem unteren Schieberraum 59 verbindet.

In der in Fig. 3 gezeigten Trennstellung ist der Steuerschieber 57 in seiner unteren Endlage. Der Steuerschieber ist fest mit einem Ventilkolben 60 verbunden. Ein Dichtelement 61 dichtet in Verbindung mit dem Ventilkolben 60 den Schieberraum 55 zur Atmosphäre hin ab. Der Steuerschieber 57 ist über eine Druckfeder 62 in die in Fig. 3 gezeigte Stellung vorgespannt.

Wie am besten aus Fig. 1 ersichtlich ist, ist die untere Membrankammer 51 über eine Leitung 63 mit dem Eingang, der Schieberraum 55 über eine Leitung 64 mit dem Ausgang, der untere Schieberraum 59 über eine Leitung 65 mit dem Raum zwischen Küken 9 und Ventil 30 , der auf der Ausgangsseite des Steuerkolbens 40 liegende Raum über eine Leitung 66 mit Atmosphäre, der auf der Rückseite des Ventilkolbens anschließende Raum 67 über eine Leitung 68 mit Atmosphäre und der Steuerraum 69 über die Leitung 37 mit der Kolben-Zylinder-Einrichtung 33 verbunden.

Wie aus Fig. 1 ersichtlich ist, sind im Gehäuse im untersten bodenseitigen Bereich Bohrungen 70 vorgesehen, über die das Gehäuseinnere mit Atmosphäre in Verbindung steht.

In der in den Fig. 1 und 3 gezeigten Stellung befinden sich der Rohrtrenner und entsprechend das Küken 9 in Trennstellung. Die Bohrung 11 ist über die Bohrungen 70 belüftet. Zwischen Eingangsstutzen und Ausgangsstutzen herrscht Druckausgleich. Über die Steuerleitung 64 werden der Schieberraum 55 und der untere Schieberraum 59 mit Druck beaufschlagt. Ein Rückschlagventil 71 in der Leitung 65 ist geschlossen. Der Steuerschieber 57 und der Ventilkolben 60 werden durch die auf 0,3 bar vorgespannte Druckfeder 62 in die untere Endlage langsam umgesteuert, wobei der Wasserinhalt aus dem unteren Schieberraum 59 langsam über die Verbindungsbohrung 58 verdrängt wird. In dieser Schaltstellung ist weiterhin über einen Steuerkanal 72 die obere Druckkammer 52 mit Mediumsdruck beaufschlagt.

Zwischen der oberen Druckkammer 52 und der Membrankammer 51 herrscht damit ebenfalls Druckausgleich, so daß die auf 0,55 bar vorgespannte Druckfeder 50 den Verbindungskolben 43 und damit verbunden die Membran 41 und den Steuerkolben 40 in die in den Fig. 1 und 3 gezeigte Endstellung drücken kann. Ein Dichtelement 73 verschließt in Verbindung mit dem Steuerkolben 40 die Membrankammer 51. Die Verbindung zwischen dem Steuereingang 37 und der mit der Leitung 66 verbundenen Entlastungsbohrung wird hergestellt. Die Steuerleitung 37 wird drucklos, so daß die Druckfeder 36 den Kolben 34 und die damit verbundene Zahnstange 35 in seine in Fig. 1 gezeigte Endlage drücken. Über das Getriebe und die Verbindungswelle 15 wird das Küken in die in Fig. 1 gezeigte Trennstellung gedreht.

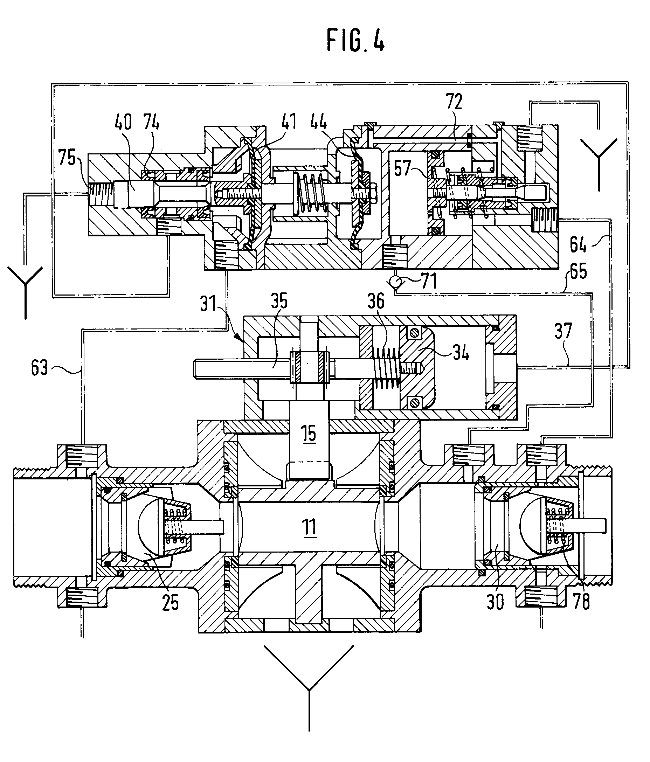

Nimmt am Ausgangsstutzen 3 beispielsweise bei Wasserentnahme der Druck ab, geht der Rohrtrenner in Durchflußstellung. Durch den Druckabfall ausgangsseitig vom Ventil 30 fällt auch der Druck in der oberen Druckkammer 52 ab, welche über die Steuerbohrung 72 mit dem Schieberraum 55 und mit der Steuerleitung 64 verbunden ist, ab. Der am Eingangsstutzen herrschende um mindestens 0,45 bar höhere Mediumsdruck drückt die Membranen 41 und 44, den Steuerkolben 40 und den Verbindungskolben 43 gegen die auf 0,55 bar vorgespannte Druckfeder 50 in die in Fig. 4 gezeigte Endstellung. Ein Dichtelement 74 verschließt in Verbindung mit dem Steuerkolben 40 die Entlastungsbohrung 75. Die Verbindung zwischen dem mit der Leitung 63 verbundenen Steuereingang und dem mit der Leitung 37 verbundenen Steuereingang wird hergestellt, und die Getriebeeinheit wird über die Steuerleitung 37 mit Druck beaufschlagt. Dadurch werden der Kolben 34 und damit die Zahnstange 35 in die in Fig. 4 gezeigte Endlage gegen die Druckfeder 36 gedrückt. Hierbei wird über das Getriebe und die Mitnehmerwelle 15 das Küken 9 um 90° in die in den Fig. 2 und 4 gezeigte Durchflußstellung gedreht. Als Folge davon öffnet sich das eingangsseitige Ventil 25, wodurch das Medium durch die Mitteldruckzone bis zum ausgangsseitigen Ventil 30 fließt. Über die Steuerleitung 65 wird der Schieberraum 55 über die Drosselbohrung mit Druck beaufschlagt. Als Folge davon öffnet das Rückschlagventil 71. Anstelle der Drosselbohrung kann übrigens auch eine einstellbare Durchflußdrossel verwendet werden.

Der Steuerschieber 57 und der Ventilkolben 60 werden wegen des größeren Differenzdruckes zwischen oberem und unterem Schieberraum entgegen der Wirkung der Feder 62 gedrückt. Ein Dichtelement 76 verschließt in Verbindung mit dem Ventilkolben 60 den Schieberraum 55. Dadurch wird die Verbindung zu einer mit Atmosphäre verbundenen Entlastungsbohrung 77 hergestellt. Die obere Druckkammer 52 wird über den Steuerkanal 72 zur Atmosphäre hin entlastet, so daß der Rohrtrenner in der in Fig. 2 und 4 gezeigten Durchflußstellung verbleibt. Bei Durchflüssen größer 30 Liter pro Stunde öffnet auch das ausgangsseitige Ventil 30 mit seiner um ca. 0,2 bar gegenüber der Feder 62 vorgespannten Feder 78.

Damit der Rohrtrenner auch bei geringeren Durchflüssen von weniger als 30 Liter pro Stunde und den damit verbundenen Druckschwankungen in seiner stabilen Betriebsstellung verbleibt, ist die Schalteinheit 54 als Zeitverzögerungsglied ausgebildet. Ist der Durchfluß kleiner als 30 Liter pro Stunde, so wird über die Steuerleitung 65, die Durchgangsbohrung 58 und die Steuerleitung 64 ein Bypass hergestellt, welcher den Rohrtrenner in einer stabilen Betriebsstellung hält.

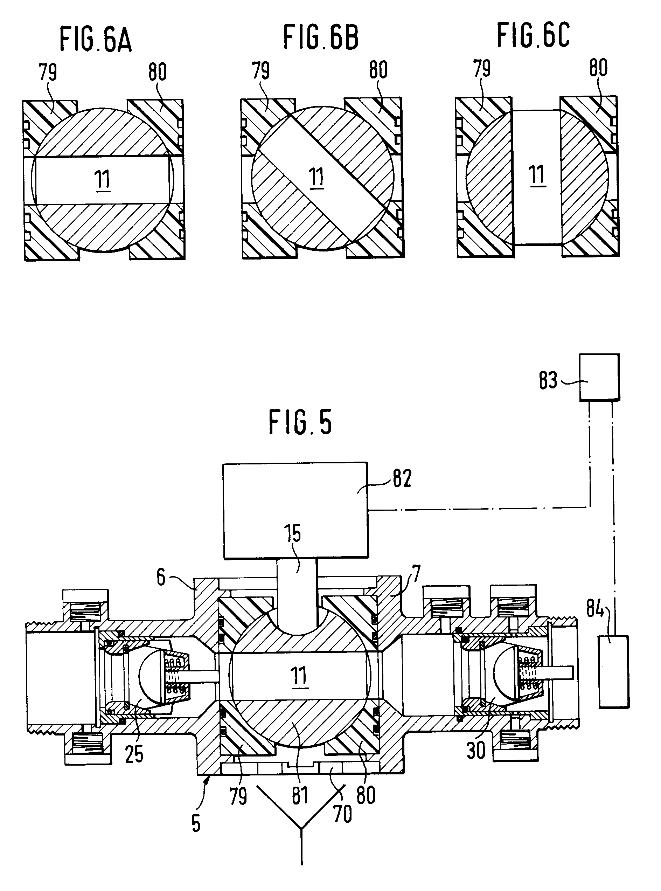

Die in Fig. 5 gezeigte Ausführungsform unterscheidet sich zunächst von der vorhergehenden Ausführungsform dadurch, daß anstelle des Küken-Ventils ein Kugelventil vorgesehen ist. Dieses umfaßt zwei im Inneren der Flansche 6, 7 angeordnete Zylinderscheiben 79, 80, die auf ihrer Innenseite jeweils symmetrisch zum Mittelpunkt des Kugelventils hin hohlkugelförmig ausgebildet sind und zur Aufnahme des kugelförmigen Ventilkörpers 81 dienen. Die Zylinderscheiben sind vorzugsweise aus Teflon gebildet, so daß sich eine einwandfrei Abdichtung ergibt. Die Kugel ist mit der Mitnehmerwelle 15 verbunden, die in der oben beschriebenen Weise über eine Getriebeeinheit angetrieben wird. Die Zylinderscheiben und die Kugel sind so angepaßt, daß sie in der in Fig. 6a gezeigten Weise mit dem Eingangsstutzen bzw. Ausgangsstutzen und in der in Fig. 6c gezeigten Weise mit dem Inneren des Gehäuses 5 und damit über die Bohrung 70 mit der Atmosphäre verbunden sind. Die Ausbildung der Zylinderscheiben ist so gewählt, daß in der in Fig. 6b gezeigten 45°-Stellung ein hermetisches Verschließen der Bohrung 11 und hermetisches Abtrennen zwischen Ein- und Ausgang erfolgt.

In der in Fig. 5 gezeigten Ausführungsform sind die oben beschriebenen Getriebeeinheit und Steuerung durch einen elektrischen Antrieb 82 mit elektrischer Steuerung 83 ersetzt. Der Steuerung 83 wird über einen Sensor 84 der ausgangsseitige Druckwert zugeführt. Das Öffnen und Schließen erfolgt in Abhängigkeit von den anliegenden Drükken.

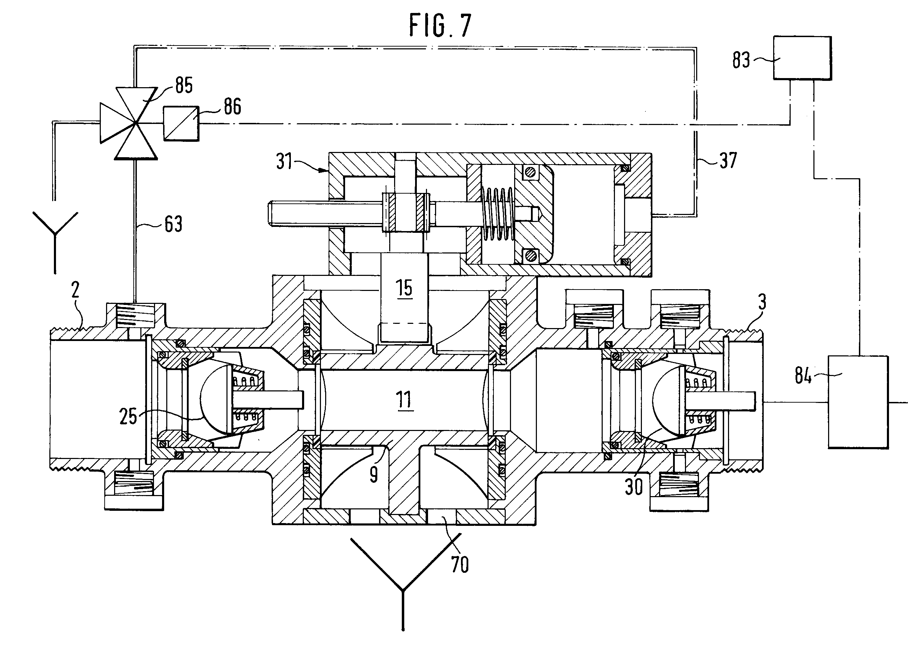

Die in Fig. 7 gezeigte Ausführungsform unterscheidet sich von der in Fig. 1 gezeigten Ausführungsform dadurch, daß die pneumatische Steuereinrichtung 38, 54 durch eine elektronische Steuereinrichtung mit einem Drei-Wege-Ventil 85 und eine über die Steuerung 83 gesteuerte Regeleinheit 86 ersetzt ist.

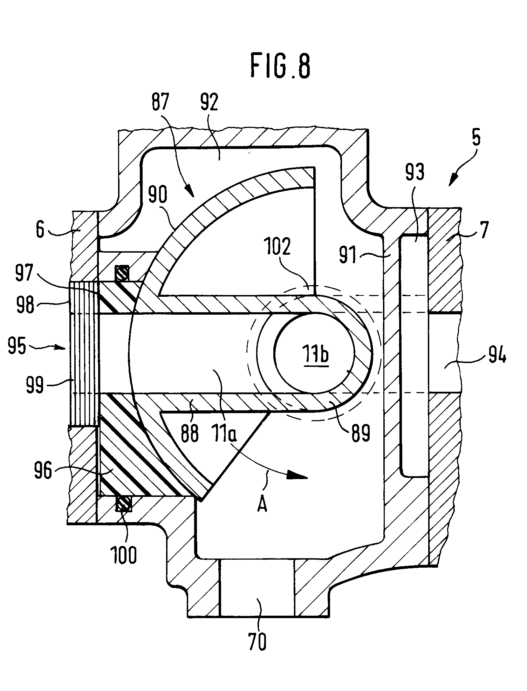

Bei der in Fig. 8 - 10 gezeigten weiteren Ausführungsform des Rohrtrenners befindet sich im Gehäuse 5 ein Absperrelement 87 mit der Grundform eines T-förmig durchbohrten Zylindersegments, mit dem gegenüber dem in der Ausführungsform nach Fig. 1 und 2 verwendeten (zylindrischen) Kahnküken insbes. für den Einsatz des Rohrtrenners bei Rohrleitungen großen Durchmessers eine Verringerung der Größe und des Gewichts erreicht wird.

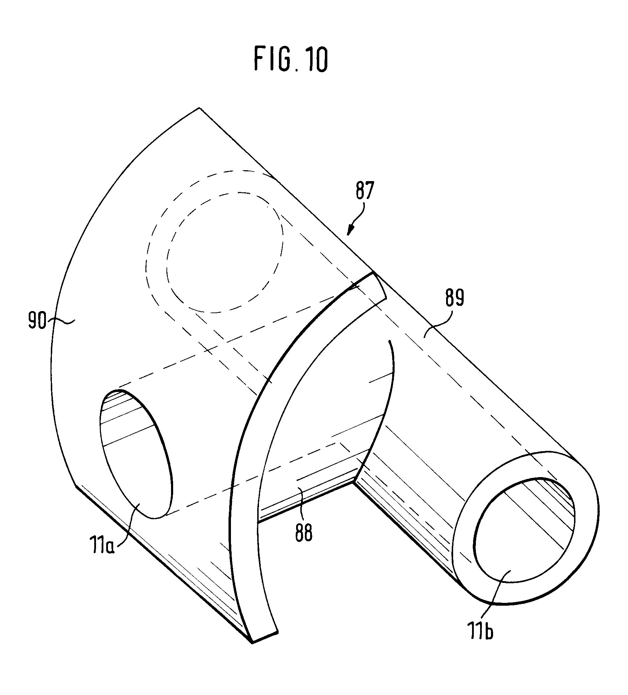

Das Absperrelement 87 weist zwei Schenkel 88 und 89 mit jeweils einer Bohrung 11a bzw. 11b auf, von denen der erste Schenkel 88 im rechten Winkel in der Mitte des zweiten Schenkels 89 an diesen derart angesetzt ist, daß sich die Mittelachsen beider Bohrungen schneiden und die Bohrungen miteinander in Verbindung stehen. Am dem zweiten Schenkel 89 abgewandten Ende des ersten Schenkels 88 ist eine zur Mittelachse der Bohrung 11b konzentrische Zylindermantelsegmentfläche 90 mit einer die Bohrung 11a des ersten Schenkels verlängernden Bohrung ausgebildet. Die Gestaltung des Absperrelements ist am besten in Fig. 10 zu erkennen.

Das Gehäuse 5 weist auch bei dieser Ausführungsform einen eingangsseitigen Flansch 6 und einen ausgangsseitigen Flansch 7 auf.

Am Eingang 95 des Gehäuses 5 befindet sich ein den Eingang umschließendes Dichtelement 96 mit kreisförmigem Querschnitt und einer mit der Mittelachse des Eingangs konzentrischen Bohrung, dessen eine Stirnfläche 97 mit einer sich gegen eine ausgearbeitete Stirnfläche 98 am Eingang abstützende, im Flansch 6 aufgenommene Tellerfeder 99 in Kontakt steht. Die andere Stirnfläche des Dichtelements 96 hat eine der Form der Zylindermantelsegmentfläche 90 des Absperrelements 87 im Sinne einer Negativform entsprechende Gestalt und wird durch die Tellerfeder 99 gegen diese Zylindermantelsegmentfläche gedrückt. Um das Dichtelement 96 herum ist noch eine O-Ring-Dichtung 100 angeordnet. Durch das Zusammenwirken der Dichtungselemente und der Zylindermantelsegmentfläche wird das Gehäuse 5 gegen den Eingang 95 abgedichtet und ein Ausströmen von Flüssigkeit über die Bohrung 70 verhindert.

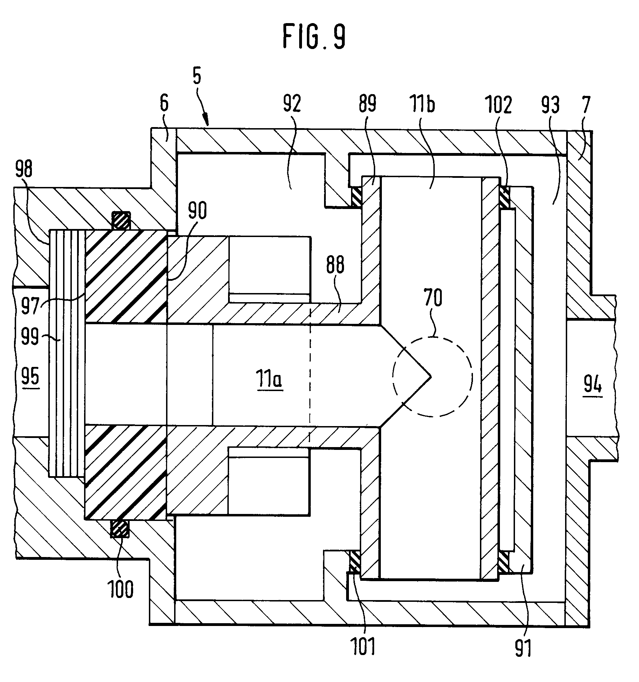

Das Gehäuse 5 ist in zwei durch eine Innenwandung 91 abgetrennte und gegeneinander abgedichtete Kammern 92 und 93 aufgeteilt, wie am besten in Fig. 9 zu erkennen ist.

Die erste eingangsseitige Kammer 92 umschließt - mit Ausnahme der beiden Enden des Schenkels 89 - das Absperrelement 87, das mit horizontaler und zur Verbindungslinie zwischen Ausgang 94 und Eingang 95 des Gehäuses senkrechter Lage des Schenkels 89 und dem Eingang 95 zugewandter Zylindermantelsegmentfläche 90 in das Gehäuse 5 eingebaut ist. Sie ist im untersten bodenseitigen Bereich mit einer Bohrung 70 versehen, über die sie mit Atmosphäre in Verbindung steht.

Die zweite, ausgangsseitige Kammer 93 steht einerseits ständig mit beiden Enden der Bohrung 11b und über diese auch mit der Bohrung 11a, andererseits ständig mit dem Ausgang 94 des Gehäuses 5 in Verbindung.

Um die die Innenwandung 91 durchstoßenden Mündungen des Rohrteiles 89 herum sind die Kammern 92 und 93 mittels Dichtungen 101 und 102 gegeneinander abgedichtet.

In der in Fig. 8 gezeigten Durchflußstellung des Absperrelements liegt dessen Bohrung 11a waagerecht im Gehäuse 5, wodurch vom Eingang 95 über die Bohrung 11a, die Bohrung 11b und die Kammer 93 eine Verbindung zum Ausgang 94 des Gehäuses 5 besteht und ein Flüssigkeitsstrom das Gehäuse ungehindert passieren kann.

Das Absperrelement 87 ist aus der in Fig. 8 gezeigten Durchflußstellung in der durch den Pfeil A angegebenen Weise um die Mittelachse der Bohrung 11b entgegen dem Uhrzeigersinn in die Trennstellung drehbar, in der das eingangsseitige Ende der Bohrung 11a in den unteren Bereich der ersten Kammer 92 mündet. Dabei ist der Eingang durch die Zylindermantelsegmentfläche 90 verschlossen und dadurch der Flüssigkeitsstrom zum Ausgang unterbrochen.

In dieser Trennstellung des Absperrelements steht die Kammer 92 also mit der Bohrung 11a und über diese auch mit der Bohrung 11b des Absperrelements 87 sowie weiter mit der Kammer 93 und schließlich dem Ausgang 94 in Verbindung.

Damit steht in der Trennstellung des Absperrelements auch die Kammer 93 über die Bohrung 70 in der ersten Kammer 92 mit Atmosphäre in Verbindung.

Damit kann die in den Bohrungen und Kammern enthaltene Flüssigkeit über die Öffnung 70 nach unten abgeleitet und das gesamte Gehäuse belüftet werden.

**Patentansprüche**

1. Rohrtrenner (1)
   mit einer Sperreinrichtung, die in einer ersten Stellung einen Eingang (2) mit einem Ausgang (3) des Rohrtrenners verbindet und in einer zweiten Stellung den Eingang (2) von dem Ausgang (3) abtrennt,
   mit einer Steuereinrichtung (38, 54; 83) zum Schalten der Sperreinrichtung in die erste bzw. zweite Stellung, mit einem je nach Stellung den Flüssigkeitsstrom vom Eingang zum Ausgang sperrenden oder freigebenden vorgespannten ausgangsseitigen Sperrventil (30), dadurch gekennzeichnet, daß
   die Sperreinrichtung eine um eine sich quer zur Durchflußrichtung erstreckende Achse drehbares Absperrelement (9, 81) mit einer in einer ersten Drehstellung Ein- und Ausgang (2, 3) verbindenden Bohrung (11) aufweist.

2. Rohrtrenner nach Anspruch 1, dadurch gekennzeichnet, daß das Absperrelement als Hahnküken (9) ausgebildet ist.

3. Rohrtrenner nach Anspruch 1, dadurch gekennzeichnet, daß das Absperrelement (81) als Kugelelement ausgebildet ist.

4. Rohrtrenner nach Anspruch 1, dadurch gekennzeichnet, daß das Absperrelement (87) die Grundform eines Zylindersegments aufweist.

5. Rohrtrenner nach Anspruch 1 oder 4, dadurch gekennzeichnet, daß das Absperrelement (87) zwei in einem rechten Winkel miteinander verbundene Schenkel (88, 89) mit je einer Bohrung (11a, 11b) und eine an dem zweiten Schenkel (89) abgewandten Ende des Schenkels ausgebildete Zylindermantelsegmentfläche (90) mit einer mit der Bohrung (11a) des Schenkels (88) korrespondierenden Bohrung aufweist.

6. Rohrtrenner nach Anspruch 4 oder 5, dadurch gekennzeichnet, daß das Gehäuse (5) eine erste mit Atmosphäre in Verbindung stehende Kammer (92) und eine zweite, gegen die erste Kammer (92) abgedichtete, mit dem Ausgang (94) des Gehäuses (5) in Verbindung stehende Kammer (93) aufweist, wobei die Bohrung (11; 11b) des Absperrelements ausgangsseitig in die zweite Kammer (93) mündet.

7. Rohrtrenner nach einem der Ansprüche 1 bis 3, dadurch gekennzeichnet, daß eine mit dem Absperrelement (9, 81) zusammenwirkende abdichtende Wandung (23, 24; 79, 80, 97) vorgesehen ist, die federnd gegen das Absperrelement (9, 81, 87) vorgespannt ist.

8. Rohrtrenenr nach einem der Ansprüche 1 bis 6, dadurch gekennzeichnet, daß das Absperrelement(9, 87) eine in Richtung seiner Drehachse liegende Stützwelle (12) zum Lagern in einem Gehäuse (5) aufweist.

9. Rohrtrenner nach einem der Ansprüche 1 bis 4, dadurch gekennzeichnet, daß ein mit der Bohrung (11) in Trennstellung zusammenwirkender Ableitungsraum (70) vorgesehen ist, und daß die mit dem Absperrelement (9, 81) zusammenwirkende Wandung (23, 24; 79, 80) so ausgebildet ist, daR zwischen der Verbindungsstellung und der Abtrennstellung ein Abschnitt vorgesehen ist, der die Bohrung (11) beidseitig hermetisch abschließt.

10. Rohrtrenner nach einem der Ansprüche 1 bis 7, dadurch gekennzeichnet, daß ein je nach Stellung den Flüssigkeitsstrom vom Eingang zum Ausgang sperrendes oder freigebendes vorgespanntes eingangsseitiges Sperrventil (25) vorgesehen ist.

## FIG.1

FIG.2

FIG. 3

EP 0 495 458 A2

FIG. 4

10

## FIG.6A

79    80

11

## FIG.6B

79    80

11

## FIG.6C

79    80

11

83

## FIG.5

82

15

6    7

84

25    11    30

5    79    81    80

70

FIG. 7

# FIG.8

# FIG.9

# FIG. 10